# EUROPÄISCHE PATENTANMELDUNG

(11) **EP 1 110 452 A1**
(43) Veröffentlichungstag der Anmeldung: **27.06.2001**
(21) Anmeldenummer: 99125556.3
(22) Anmeldetag: 21.12.1999
(51) Int. Cl.: A01N 37/10, A01N 37/40, A01N 25/02, B08B 3/04

(54) **Desinfektionsmittelkonzentrat**

(71) Anmelder: Chemische Fabrik Dr. Weigert(GMBH & CO.), D-20539 Hamburg (DE)
(72) Erfinder: Kühnau, Birgit, 22047 Hamburg (DE); Schreiber, Olaf, 22145 Hamburg (DE); Wagemann, Wolfgang, Dr., 22967 Tremsbüttel (DE)
(74) Vertreter: Glawe, Delfs, Moll & Partner

(57) **Zusammenfassung**

Gegenstand der Erfindung ist ein flüssiges Desinfektionsmittelkonzentrat mit den folgenden Inhaltsstoffen:
- Benzoesäure und/oder ein mikrobizides Benzoesäurederivat
- wenigstens ein organisches Lösungsmittel für die Benzoesäure und/oder deren Derivat(e), das mit Wasser mischbar oder in Wasser löslich ist,
- wenigstens eine Säure und/oder Puffersubstanz zur Einstellung eines sauren pH-Wertes.

Die Erfindung erlaubt es, Benzoesäure oder ein mikrobiozides Benzoesäurederivat wie Salicylsäure in undissoziierter Form zusammen mit einer weiteren Säure zu einem flüssigen, einphasigen Eintopfkonzentrat zu formulieren, das mit Wasser zu einer CIP-Reinigungslösung angesetzt werden kann. Gegenstand der Erfindung is ferner die Verwendung eines solchen Konzentrats zur CIP-Reinigung von Anlagen der Lebensmittel- und Getränkeindustrie.

## Beschreibung

Die Erfindung betrifft ein flüssiges Desinfektionsmittelkonzentrat sowie dessen Verwendung bei der CIP-Reinigung von Anlagen der Lebensmittel- und Getränkeindustrie.

Das CIP(cleaning in place)-Reinigen von Anlagen der Lebensmittel- und Getränkeindustrie wie beispielsweise Tanks und Rohrleitungen ist aus offenkundiger Vorbenutzung bekannt. Die zu reinigende Anlage wird mit einer oder sequentiell mit mehreren Reinigungs- und/oder Desinfektionslösungen gespült. Die Reinigungslösungen werden nach Möglichkeit aufgefangen und mehrfach verwendet (Stapelreinigung). Insbesondere in der Lebensmittel- und Getränkeindustrie ist eine einwandfreie Desinfektion gereinigter Flächen wichtig.

Neben der Verwendung von Peressigsäure und Halogenessigsäuren ist es aus offenkundiger Vorbenutzung bereits bekannt, eine salicylsäurehaltige Desinfektionslösung zu verwenden, die aus zwei getrennten Konzentraten angesetzt wird. Dies ist aufwendig.

Der Erfindung liegt die Aufgabe zugrunde, ein Desinfektionsmittelkonzentrat zu schaffen, das mit geringem Aufwand das Ansetzen einer wirksamen und mehrfach verwendbaren (stapelbaren) Desinfektionslösung zur Verwendung in CIP-Verfahren erlaubt.

Das erfindungsgemäße flüssige Desinfektionsmittelkonzentrat weist folgende Inhaltsstoffe auf:
- Benzoesäure und/oder ein mikrobiozides Benzoesäurederivat,
- wenigstens ein organisches Lösungsmittel für die Benzoesäure und/oder deren Derivat(e), das mit Wasser mischbar oder in Wasser löslich ist,
- wenigstens eine Säure und/oder Puffersubstanz zur Einstellung eines sauren pH-Wertes.

Zunächst seien einige im Rahmen der Erfindung verwendete Begriffe erläutert.

Als Desinfektionswirkstoff verwendet das erfindungsgemäße Konzentrat Benzoesäure und/oder ein mikrobiozides Benzoesäurederivat. Mikrobiozid bedeutet im Rahmen der Erfindung, daß das Derivat unter Anwendungsbedingungen bei der CIP-Reinigung eine keimabtötende Wirkung auf Bakterien und/oder Pilze aufweist. Unter diesen mikrobioziden Benzoesäurederivaten ist Salicylsäure, p-Hydroxybenzoesäure und p-Chlorbenzoesäure bevorzugt, Salicylsäure ist besonders bevorzugt.

Das Konzentrat enthält ferner wenigstens ein organisches Lösungsmittel für die Benzoesäure bzw. deren Derivate. Die Löslichkeit der Benzoesäure bzw. des Derivats in diesem Lösungsmittel sowie in dem Gesamtkonzentrat, das dieses Lösungsmittel enthält, muß hinreichend hoch sein, daß sich beim Anmischen des Konzentrats zu einer CIP-Reinigungslösung darin eine mikrobiozid wirksame Konzentration von Benzoesäure bzw. deren Derivaten einstellt. Die Benzoesäure bzw. deren Derivate sollen in dem Desinfektionsmittelkonzentrat mit diesem Lösungsmittel vorzugsweise zu wenigstens 1 Gew.-%, weiter vorzugsweise wenigstens 2 Gew.-% löslich sein. Erfindungsgemäß liegt der Anteil des Mikrobiozids im Konzentrat bevorzugt zwischen 3 bis 15 Gew.-%, weiter vorzugsweise 4 bis 12 Gew.-%.

Dieses Lösungsmittel soll mit Wasser mischbar im Sinne einer vollständigen Mischbarkeit oder aber in Wasser löslich sein. Der technische Zweck dieses Merkmals liegt darin, daß beim Ansetzen einer CIP-Desinfektionsmittellösung mit dem erfindungsgemäßen Konzentrat sich eine einphasige wäßrige Lösung herstellen läßt.

Erfindungsgemäß ist ferner wenigstens eine Säure und/oder Puffersubstanz zur Einstellung eines sauren pH-Wertes (pH < 7) enthalten. Diese saure pH-Wert muß sich einstellen nicht nur im Konzentrat, sondern auch in einer wäßrigen Desinfektionsmittellösung, die das Konzentrat in der vorgesehenen Anwendungskonzentration enthält. Zweck des sauren pH-Wertes ist es, dafür zu sorgen, daß die Benzoesäure bzw. deren Derivate zu einem technisch relevanten Anteil in undissoziierter Form vorliegen, da nur diese undissoziierte Form mikrobiozid wirksam ist. Dementsprechend ist der pH-Wert vorzugsweise kleiner oder gleich 5, weiter vorzugsweise kleiner oder gleich 3,5, weiter vorzugsweise kleiner oder gleich 2. Er wird in der Regel den Wert von 1,2, vorzugsweise 1,4, nicht unterschreiten. Diese pH-Werte beziehen sich wieder auf die mittels des erfindungsgemäßen Konzentrats angesetzten fertigen Desinfektionsmittellösungen, die zur CIP-Reinigung verwendet werden. Der Ansatz einer Desinfektionslösung erfolgt durch Verdünnen des erfindungsgemäßen Konzentrats mit Wasser in einem Verhältnis von vorzugsweise 1:20 bis 1:1000, besonders bevorzugt etwa 1:50 bis 1:200.

Der Kern der Erfindung liegt darin, ein Desinfektionsmittelkonzentrat auf der Basis Benzoesäure bzw. Benzoesäurederivate als sogenanntes Eintopfkonzentrat zur Verfügung zu stellen, das mit Wasser unmittelbar zu einer anwendungsfertigen Desinfektionslösung für CIP-Zwecke verdünnt werden kann. Technisch ist dies nicht trivial, da einerseits, wie vorstehend erwähnt, die Säure nur in ihrer undissoziierten Form mikrobiozid wirksam ist (siehe hierzu auch Wallhäußer, Praxis der Sterilisation, Georg Thieme Verlag, Stuttgart (1988), Seite 481 f.). Andererseits ist diese undissoziierte Säure aber nur geringfügig wasserlöslich und kann daher nicht in einem wäßrigen Konzentrat formuliert werden, ohne auszukristallisieren.

Die bereits genannte offenkundige Vorbenutzung (das sogenannte Dual-CIP-Verfahren der Firma DiverseyLever) schlägt daher vor, die Desinfektionslösung aus zwei getrennten Bestandteilen anzusetzen, von denen der eine eine wäßrige Salicylatlösung enthält (Salze der Salicylsäure sind gut wasserlöslich) und der andere Mineralsäuren, so daß die mikrobiozid wirksame Salicylsäure erst in situ beim Zusammengeben der beiden Bestandteile entstehen soll.

Die Erfindung hat erkannt, daß sich dieses aufwendige Ansetzen der Desinfektionslösung aus zwei getrennten Bestandteilen vermeiden läßt durch eine vorstehend definierte Zusammensetzung. Das erfindungsgemäß eingesetzte organische Lösungsmittel sorgt dafür, daß die Benzoesäure bzw. deren Derivate im Konzentrat in Lösung bleiben, obwohl sie in undissoziierter Form vorliegen. Das erfindungsgemäße Konzentrat kann daher gleichzeitig als sogenanntes Eintopfkonzentrat die erforderliche Menge Säure und/oder Puffersubstanz zur Einstellung des erforderlichen sauren Milieus in der fertigen Desinfektionslösung enthalten, ohne daß es zu einer Ausfällung von Salicylsäure oder einer anderen verwendeten Benzoesäure kommt. Erstmals ist erfindungsgemäß somit die Kombination des mikrobioziden Wirkstoffes wie beispielsweise Salicylsäure einerseits und der erforderlichen Säure andererseits in einem einzigen Konzentrat möglich.

Als organische Lösungsmittel sind Alkohole, insbesondere einund zweiwertige Alkohole, besonders bevorzugt. Bevorzugt sind Glykole wie Ethylen- und Propylenglykole, deren höhere Homologe und Derivate (z. B. Diglykolether). Erfindungsgemäß können beispielsweise verwendet werden Isopropanol, n-Propanol, Ethylenglykol, Diethylenglykol, Propylenglykol, Dipropylenglykol, Butylglykol und Butyldiglykol. Butyldiglykol oder eine Mischung von Butyldiglykol mit anderen Alkoholen ist besonders bevorzugt. Ebenfalls bevorzugt sind aprotische dipolare Lösungsmittel wie z.B. DMF (Dimethylformamid), DMSO (Dimethylsulfoxid) und NMP (N-Methylpyrrolidon).

Als Säuren werden bevorzugt Mineralsäuren und/oder organische Säuren verwendet. Bevorzugt sind beispielsweise Schwefelsäure und Phosphorsäure, andere Mineralsäuren wie Salzsäure und Salpetersäure können ebenfalls verwendet werden. Als organische Säuren können beispielsweise verwendet werden Ameisensäure, Essigsäure, Propionsäure, Glykolsäure, Maleinsäure, Malonsäure sowie deren Homologe (Bersteinsäure, Adipinsäure etc.) und die sogenannten Fruchtsäuren (beispielsweise Zitronensäure, Äpfelsäure, Weinsäure und dergleichen). Bevorzugt ist ein solcher Mineralsäuregehalt, daß sich in der mittels des erfindungsgemäßen Konzentrats angesetzten Desinfektionslösung eine ausreichende elektrische Leitfähigkeit einstellt, so daß die Leitfähigkeitsmeßsonden von CIP-Anlagen bei der Stapelreinigung die Desinfektionslösung anhand ihrer Leitfähigkeit von vorausgeschicktem oder nachfolgendem Spülwasser mit geringerer Leitfähigkeit unterscheiden können und damit eine Trennung der jeweiligen Reinigungsstapel in bekannter Weise vornehmen können.

Die obige Aufzählung möglicher Bestandteile des Reinigungsmittelkonzentrats ist nicht abschließend. Es können weitere übliche Bestandteile von Reinigungs- oder Desinfektionsmitteln enthalten sein, wie beispielsweise Lösevermittler (Cumolsulfonat, Phosphorsäureester oder dergleichen), Tenside zur Verbesserung der Benetzbarkeit von Oberflächen und dergleichen. Bei gering verschmutzten Anlagen kann es ausreichend sein, ausschließlich mit dem erfindungsgemäßen Desinfektionsmittelkonzentrat sowohl zu reinigen als auch zu desinfizieren und anschließend nachzuspülen, da es durch den Säuregehalt und einem ggf. möglichen Tensidzusatz auch eine gewisse Reinigungswirkung entfaltet.

Der Gehalt an organischen Lösungsmitteln des erfindungsgemäßen Konzentrats beträgt vorzugsweise 15 bis 75 Gew.-%, weiter vorzugsweise 20 bis 50 Gew.-%, weiter vorzugsweise 40 bis 50 Gew.-%. Der Säuregehalt liegt bevorzugt zwischen 10 und 60 Gew.-%, weiter vorzugsweise 25 bis 55 Gew.-%, weiter vorzugsweise 30 bis 50 Gew.-%. Es muß einerseits genügend Lösemittel vorhanden sein, um die Benzoesäure bzw. deren Derivate in Lösung zu halten, andererseits braucht man ausreichende Säuremengen, um auch nach einer starken Verdünnung auf Anwendungskonzentration mit Wasser das gewünschte saure Milieu in der fertig angesetzten Lösung beizubehalten.

Gegenstand der Erfindung ist ferner die Verwendung eines solchen Desinfektionsmittelkonzentrats zur Reinigung, insbesondere CIP-Reinigung, von Anlagen der Lebensmittel- und Getränkeindustrie. Das Konzentrat wird mit Wasser zu einer Anwendungslösung verdünnt, so daß sich in dieser Lösung vorzugsweise ein Gehalt von Benzoesäure und/oder mikrobioziden Benzoesäurederivaten von 0,01 bis 0,1 Gew.-%, vorzugsweise 0,02 bis 0,08 Gew.-% ergibt. In der Regel wird man zu diesem Zweck das Konzentrat in einem Verhältnis von 1:20 bis 1:1000 mit Wasser verdünnen. Die Desinfektionslösung kann in einem dem Fachmann geläufigen Stapelverfahren wieder aufgefangen und mehrfach verwendet werden. vorzugsweise besitzt die Anwendungslösung eine ausreichende Leitfähigkeit, so daß sie mittels Leitfähigkeitssensoren in der zu reinigenden Anlage von vorlaufendem oder nachfolgendem Spülwasser unterschieden und mittels geeigneter Einrichtungen abgetrennt werden kann.

Der Begriff "CIP-Reinigung" ist im Rahmen dieses Anspruchs weit zu verstehen und umfaßt Schritte, bei denen entweder eine desinfizierende oder eine reinigende Wirkung oder beides auf die mit der entsprechenden Lösung beaufschlagten Anlagenteile ausgeübt wird.

Die Temperatur bei dem Reinigungs- bzw. Desinfektionsvorgang beträgt vorzugsweise 0 bis 95°C, weiter vorzugsweise 0 bis 60°C, weiter vorzugsweise 0 bis 40°C, weiter vorzugsweise 4 bis 30°C. Die aus dem erfindungsgemäßen Konzentrat angesetzte Lösung besitzt eine ausreichende mikrobiozide Wirkung bei sämtlichen Temperaturen, die in Anlagen der Lebensmittel- und Getränkeindustrie üblich sind. Man wird daher in der Regel bei den Temperaturen reinigen können, bei denen diese Anlagen üblicherweise verwendet werden. Von besonderem Vorteil ist dies bei der Reinigung von Anlagen der Brauereiindustrie. Insbesondere im Kellerbereich (Gärung, Lagerung, Filbration) herrschen in Tanks und Anlagen üblicherweise niedrige Temperaturen von etwa 6°C. Bei dieser Temperatur kann erfindungsgemäß ohne weiteres gereinigt werden. Die erfindungsgemäße Reinigung ist ferner unter CO₂-Atmosphäre möglich, die zu reinigenden Tanks und Anlagen müssen nicht zunächst von CO₂ befreit und belüftet werden.

In der nachfolgenden Tabelle sind acht Ausführungsbeispiele eines erfindungsgemäßen Desinfektionsmittelkonzentrats angegeben.

| Inhaltsstoffe | Beispiele: | | | | | | | |
|---|---|---|---|---|---|---|---|---|
| | 1 | 2 | 3 | 4 | 5 | 6 | 7 | 8 |
| VE-Wasser | 26,7 | 24,2 | 34,5 | 22 | 35 | 10,2 | 29 | 30,2 |
| Butyldiglykol | 35 | 40 | -- | -- | 20 | 48 | 35 | 20 |
| N-Methyl-Pyrrolidon | -- | -- | -- | 35 | -- | -- | -- | -- |
| Butylglykol | -- | -- | 25 | -- | -- | -- | -- | -- |
| Benzoesäure | -- | -- | -- | -- | -- | -- | 2 | -- |
| Salicylsäure | 4 | -- | 2 | 4 | 2 | 10 | -- | 4 |
| p-Hydroxy-Benzoesäure | -- | 4 | -- | -- | -- | -- | -- | -- |
| Phosphorsäure | 12 | 12 | 15 | 15 | 15 | 12 | -- | 12 |
| Schwefelsäure | 2,8 | 2,8 | 3,5 | 4 | -- | 2,8 | 3,5 | 2,8 |
| Salpetersäure | -- | -- | -- | -- | 4 | -- | -- | -- |
| Na-Cumolsulfonat | -- | -- | -- | -- | 4 | -- | -- | 4 |
| Essigsäure | -- | -- | -- | -- | -- | -- | 3 | -- |
| Glykolsäure -- | | --- | -- | -- | -- | -- | 3 | -- |
| Zitronensäure | -- | -- | -- | -- | -- | -- | 5 | -- |
| 1,2- Propylenglykol | -- | -- | -- | -- | -- | -- | -- | 10 |
| Ameisensäure | 17 | 17 | 20 | 20 | 20 | 17 | 17 | 17 |
| Isopropanol | 2,5 | -- | -- | -- | -- | -- | 2,5 | -- |

Sämtliche Angaben in der Tabelle sind Gewichtsanteile der jeweiligen Inhaltsstoffe. Der Anteil "Wasser, vollentsalzt" beinhaltet nicht zusätzliches Restwasser, das durch die übrigen Inhaltsstoffe in das Konzentrat gelangen kann. Sämtliche Konzentrate gemäß den Beispielen 1 bis 8 sind klare Lösungen, aus denen auch bei Aufbewahrung im Kühlschrank bei 6°C nichts auskristallisiert. Sie können mit Wasser auf die gewünschte Anwendungskonzentration verdünnt und in einem üblichen CIP-Reinigungsverfahren als Desinfektionslösung verwendet werden.

## Patentansprüche

1. Flüssiges Desinfektionsmittelkonzentrat, dadurch gekennzeichnet, daß es folgende Inhaltsstoffe enthält:
- Benzoesäure und/oder ein mikrobiozides Benzoesäurederivat,
- wenigstens ein organisches Lösungsmittel für die Benzoesäure und/oder deren Derivat(e), das mit Wasser mischbar oder in Wasser löslich ist,
- wenigstens eine Säure und/oder Puffersubstanz zur Einstellung eines sauren pH-Wertes.

2. Flüssiges Desinfektionsmittelkonzentrat nach Anspruch 1,
dadurch gekennzeichnet, daß das mikrobiozide Benzoesäurederivat ausgewählt ist aus der Gruppe bestehend aus Salicylsäure, p-Hydroxybenzoesäure und p-Chlorbenzoesäure.

3. Flüssiges Desinfektionsmittelkonzentrat nach Anspruch 1 oder 2, dadurch gekennzeichnet, daß der pH-Wert kleiner oder gleich 5, vorzugsweise kleiner oder gleich 3,5, weiter vorzugsweise kleiner oder gleich 2 ist.

4. Flüssiges Desinfektionsmittelkonzentrat nach einem der Ansprüche 1 bis 3, dadurch gekennzeichnet, daß es als organisches Lösungsmittel wenigstens einen Alkohol enthält.

5. Flüssiges Desinfektionsmittelkonzentrat nach Anspruch 4,
dadurch gekennzeichnet, daß der Alkohol ausgewählt ist aus der Gruppe bestehend aus ein- und zweiwertigen Alkoholen.

6. Flüssiges Desinfektionsmittelkonzentrat nach Anspruch 5,
dadurch gekennzeichnet, daß der Alkohol ausgewählt ist aus der Gruppe bestehend aus Isopropanol, n-Propanol, Ethylenglykol, Diethylenglykol, Propylenglykol, Dipropylenglykol, Butylglykol und Butyldiglykol.

7. Flüssiges Desinfektionsmittelkonzentrat nach einem der Ansprüche 1 bis 6, dadurch gekennzeichnet, daß das organische Lösungsmittel wenigstens ein dipolares aprotisches Lösungsmittel enthält.

8. Flüssiges Desinfektionsmittelkonzentrat nach Anspruch 7,
dadurch gekennzeichnet, daß das dipolare aprotische Lösungsmittel ausgewählt ist aus der Gruppe bestehend aus DMF, DMSO und NMF.

9. Flüssiges Desinfektionsmittelkonzentrat nach einem der Ansprüche 1 bis 8, dadurch gekennzeichnet, daß die Säuren ausgewählt sind aus der Gruppe bestehend aus Mineralsäuren und organischen Säuren.

10. Flüssiges Desinfektionsmittelkonzentrat nach Anspruch 9,
dadurch gekennzeichnet, daß die Mineralsäuren ausgewählt sind aus der Gruppe bestehend aus Schwefelsäure und Phosphorsäure.

11. Flüssiges Desinfektionsmittelkonzentrat nach Anspruch 9 oder 10, dadurch gekennzeichnet, daß die organischen Säuren ausgewählt sind aus der Gruppe bestehend aus Ameisensäure, Essigsäure, Propionsäure, Glykolsäure, Maleinsäure, Malonsäure und deren Homologe und Fruchtsäuren.

12. Flüssiges Desinfektionsmittelkonzentrat nach einem der Ansprüche 1 bis 11, dadurch gekennzeichnet, daß der Gehalt an Benzoesäure und/oder mikrobioziden Benzoesäurederivaten 1 bis 15 Gew.-%, vorzugsweise 2 bis 10 Gew.-% beträgt.

13. Flüssiges Desinfektionsmittelkonzentrat nach einem der Ansprüche 1 bis 12, dadurch gekennzeichnet, daß der organische Lösemittelgehalt 15 bis 75 Gew.-%, vorzugsweise 20 bis 50 Gew.-%, weiter vorzugsweise 40 bis 50 Gew.-% beträgt.

14. Flüssiges Desinfektionsmittelkonzentrat nach einem der Ansprüche 1 bis 13, dadurch gekennzeichnet, daß der Säuregehalt 10 bis 60 Gew.-%, vorzugsweise 25 bis 55 Gew.-%, weiter vorzugsweise 30 bis 50 Gew.-% beträgt.

15. Verwendung eines Desinfektionsmittelkonzentrats nach einem der Ansprüche 1 bis 14 zur CIP-Desinfektion und/oder
Reinigung von Anlagen der Lebensmittel- und Getränkeindustrie.

16. Verwendung nach Anspruch 15, dadurch gekennzeichnet, daß der Gehalt an Benzoesäure und/oder mikrobioziden Benzoesäurederivaten in der CIP-Reinigungslösung 0,01 bis 0,1 Gew.-%, vorzugsweise 0,02 bis 0,08 Gew.-% beträgt.

17. Verwendung nach Anspruch 15 oder 16, dadurch gekennzeichnet, daß die Temperatur bei dem Reinigungsvorgang 0 bis 95°C, vorzugsweise 0 bis 60°C, weiter vorzugsweise 0 bis 40°C, weiter vorzugsweise 4 bis 30°C beträgt.
